# EUROPEAN PATENT APPLICATION

(11) **EP 1 908 359 A1**
(43) Date of publication of application: **09.04.2008**
(21) Application number: 06768049.6
(22) Date of filing: 10.07.2006
(51) Int. Cl.: A23N 17/00

(54) **FEED MANUFACTURING APPARATUS AND FEED MANUFACTURING METHOD**

(30) Priority: 11.07.2005 JP 2005201454
(71) Applicant: Pacific Science Co., Ltd., Tokyo 104-0061 (JP); Ja Higashi-Nihon Cooperative Feed & Mills Co., Ltd., Gunma 370-3522 (JP)
(72) Inventor: OGURA, Kouji, c/o National Federation, Tokyo 100-0004 (JP); NAOE, Yasukazu, c/o PACIFIC SCIENCE CO., Ltd, Tokyo 104-0061 (JP); GOMIBUCHI, Akira, c/o JA HIGASHI-NIHON COOPERATIVE FEED&MILLS CO., Gunma 370-3522 (JP)
(74) Representative: Bertsch, Florian Oliver
(86) International application number: PCT/JP2006/313687
(87) International publication number: WO 2007/007715

(57) **Abstract**

The animal feed producing plant 1 has a processing area 10 and a warehouse area (automated warehouse) 200 which are adjacent each other. The processing area 10 has a building 20 in which transfer lines 21 for transferring small containers C each containing a raw material, intermediate product or product are laid; and a group 30 of processing equipments including a mixing equipment, processing equipment, packaging equipment and the like, connected to both sides of the building 20. The small container C can be transferred between the building 20 and the automated warehouse 200. Each of the processing equipments is constructed by unitizing plural unit structures 31 having a marine container size. The building 20 has plural decks (floors) connected to the unit structures 31. Accordingly, an animal feed producing plant and method having improved traceability of the material can be provided. And, it facilitates expansion, removal and contraction of the equipment and is also available for a small-lot production of various kind products.

## Description

### Field of the Invention

The present invention relates to a plant and method for producing animal feed supplied for cattle, poultry, farmed fish, pet animal and the like. More particularly, it relates to a plant and method for receiving various types of raw materials (including primary raw material, secondary raw material, additives and the like), and mixing and processing the materials to produce an animal feed, improved in flexibility of equipments, production efficiency, safety (hygienic quality) and traceability of the product.

### Background of the Invention

An animal feed supplied for cattle has been usually produced at an animal feed mixing plant. At the animal feed mixing plant, various types of bulk materials such as field corn, bean cake, defatted bran and molasses, which are transferred by a truck, are received and temporarily stored in a relatively large-size tanks respectively. And, the raw materials each having an amount proportional to a mixing ratio of the product (a batch amount) are discharged from each tank, and mixed together to produce a batch of product. The procedures are repeated several times to produce a lot of product. And, the lot of product is stored in a product tank assigned for every product.

In such plants, processing equipments for the procedures are arranged in the order of production process and combined with a building, in many cases. Because, the large equipments such as the primary raw material tank, secondary raw material tank and mixing tank, require to be supported by the building in view of strength.

### Disclosure of the Invention

### Problems to be solved by the Invention

Such the animal feed mixing method has the following problems:

(1) For storing the received raw materials in the tank, weighing and mixing the materials, each raw material is often transferred through a common transfer line, for example a bulk transfer machine such as chain conveyer and bucket elevator. Since the bulk material often remains on such transfer machine, the remained material may be mixed with another material, stored and processed as the mixed state.

Especially, in resent years, in view of safety (hygienic quality) of the product, traceability for tracing and identifying the raw material comes to be required severely. Accordingly, in order to avoid the mixing of the raw materials, the transfer line has to idle for a long period or be cleaned every change of the raw material. Alternatively, a transfer line is allocated for every raw material. This causes a problem in which operation efficiency of the line is lowered to decrease productivity and increase cost of the plant.

In exchange for the bulk transfer machine, a pneumatic conveying system may be used. Alternatively, a method using a horizontal discharge machine such as a table feeder for discharging a raw material and a distributor for charging the raw material or product retrieved by a cyclone separator into a tank has been partially put in practical use. These methods have greater improved traceability, while the size of the plant becomes large and cost of the plant and running cost increase.

(2) Depending on exchange of supply of the feed, it is necessary to increase or decrease the amount of production by expansion and contraction of the plant. In the aforesaid type plant, it is difficult to prepare a space for expansion of the plant. Or, when a space for expansion of the plant has been reserved, it is difficult to expect which equipment to be expanded or contracted and the degree for the expansion or contraction. This is extravagance of space and reduces a variance in designing of the plant.

(3) In recent years, demand for animal feed of a specifically designed mixed ratio has been increased. Accordingly, a small-lot production of many kind of product is required. Since the aforesaid plant is designed for a large-lot and mass production, it is difficult to apply for the small-lot production of many kind of product.

In order to solve the above-mentioned problems, an object of the present invention is to provide an animal feed mixing plant and method capable of mixing and processing a small amount of each material and having high traceability. And, another object of the present invention is to provide an animal feed mixing plant in which each of processing equipments is constructed by unitizing unit structures to facilitate expansion, contraction, reconstruction and exchange of the plant.

### Means of Solving the Problems

A plant for producing animal feed according to the present invention is a plant producing animal feed by receiving, mixing and processing various materials comprising: a transfer line for transferring small containers containing a raw material, intermediate product and product respectively; a building housing said transfer line; an automated warehouse storing said small containers transferred through said transfer line, adjacent to said building; and a group of unit structures for carrying out various processing such as mixing, processing and packing, disposed at side of said transfer line, wherein said building has plural floors (decks) for connecting said unit structures.

According to the present invention, since the raw material, intermediate product and product are transferred and stored as a small container unit, mixing of the materials and the lots of the product at transferring and storing can be prevented. And, by using an automated warehouse for storing the small containers, it becomes possible to manage a lot of product and stock of the product precisely and thereby to secure traceability.

In addition, using of the small containers allows a small amount of material or product to handle and treat as a container unit. This is available for a small-lot production of many kind products. The small container may have a capacity of 1.5 to 10.0m³.

In the present invention, said transfer line is preferably arranged in the length direction of said building and connected to a transfer line in said automated warehouse, and said group of unit structures is disposed at both side of said transfer line.

In this case, the small containers can be transferred between the processing area and the automated warehouse. This allows an effective transferring of the small containers between the processing area and the automated warehouse. And, since the group of processing equipments is disposed at both side of the building housing the transfer lines, a large number of processing equipments can be disposed.

In the present invention, said transfer line is preferably arranged in plural floors of said building. For example, a raw material transfer line and a product and intermediate product transfer line are separated and arranged in different floors. This simplifies transfer of various materials and products and expands amount of the materials and products to be transferred.

In the present invention, said transfer line is preferably arranged in the uppermost floor and the lowermost floor of said building and said group of unit structures is connected to the intermediate floors of said building.

In this case, processing of the raw materials and transferring of the small container can be effectively carried out. For example, the raw materials are transferred to the uppermost floor of the building from the automated warehouse and then subjected to various processing along the dropping direction of the materials in the processing area. And, the processed materials are received at the undermost floor and then stored in the automated warehouse again.

The plant for producing animal feed according to the present invention may further comprise a large-size tank storing the primary raw material and a supply line for supplying the primary raw material from said tank to said group of unit structures.

In this case, a large-lot primary raw material may be transferred by a conveyor or an air conveyor in exchange for the small containers.

The plant for producing animal feed according to the present invention may further comprises a liquid tank for storing a liquid material and a supply line for supplying the liquid material from said tank to said group of unit structures.

In this case, it makes possible to add fat or molasses and thus to produce various high-value added animal feed.

In the present invention, said unit structure preferably has the same outside size as a marine container.

Since the processing equipment such as mixing equipment, processing equipment and packing equipment is constructed by unitizing plural unit structures, it becomes easy to expand and contract the equipment. And, the unit structure having a marine container size can enhance compatibility of the unit structure and facilitate transferring of the unit structure on both ocean and land.

A plant for producing animal feed according to another embodiment of the present invention is a plant for producing animal feed by receiving, mixing and processing various materials comprising: a tank for storing and discharging a primary raw material; a supply line for supplying the primary raw material in a bulk form; a group of small containers for containing each of a secondary raw material, intermediate product and product; a transfer line for transferring said containers; a group of equipments for processing, mixing and packing the primary raw material supplied from said tank through said transfer line and/or the secondary raw material and intermediate product get out of said small containers; and an automated warehouse for storing said small containers.

The primary raw material may be stored in a tank in exchange for the small containers because a large amount of use and rare exchange of the kind. On the other hand, the secondary raw material, intermediate product and product are divided into the small containers to be stored, treated and shipped. Therefore, a precious lot management and improvement in traceability can be accomplished.

A plant for producing animal feed according to still another embodiment of the present invention is a plant for producing animal feed by receiving, mixing and processing various primary and secondary raw materials comprising: a plural of tanks for storing and discharging various raw materials respectively; a plural of supply lines for supplying each of the raw materials in a bulk form; a tank for storing and discharging a mash intermediate product; a supply line for supplying the mash intermediate product in a bulk form; a group of small containers for containing a bulk intermediate product and the product respectively; a transfer line for transferring said small containers; a group of equipments for processing, mixing and packing the primary raw material and secondary raw material supplied from each of said tank through said transfer lines, the mash intermediate product supplied through said transfer line and/or the bulk intermediate product get out of said small containers; and an automated warehouse for storing said small containers.

The mash product includes a powdery product (for example, powders of field corn and barley); the bulk product includes a product more bulky than the powdery product or having a larger aspect ratio (a ratio of a thicker or longer side to a thinner or shorter side) (for example, a shaped product such as flake product, pellet product and hay cube).

The bulk product and a mixture of the bulk product and the mash product have a large difference in specific gravity and shape of unit particle. Accordingly, when such product is stored in a tank, the particles easily separate in the height direction according to the specific gravity and shape. That is, the particles having a large specific gravity and fine particles are easy to accumulate at the bottom of the tank. Also, when such product is stacked, breakage of the unit particle (for example, cracking of the flake product) occurs easily. Accordingly, it is preferable to contain the bulk intermediate product in a small container having substantially the same capacity as the shipping container in order to reduce the difference in quality between the product lots. On the contrary, the mash intermediate product can be stored in a tank because separation of the product and breakage of the particles hardly occurs.

A plant for producing animal feed according to still another embodiment of the present invention is a plant for producing animal feed by receiving, mixing and processing various primary and secondary raw materials comprising: a plural of tanks for storing and discharging various raw materials respectively; a plural of supply lines for supplying each of the raw materials in a bulk form; a tank for storing and discharging a mash intermediate product; a supply line for supplying the mash intermediate product in a bulk form; a group of small containers for containing a bulk intermediate product and a small-lot mash product; a transfer line for transferring said small containers; a tank for storing and discharging a large-lot mash product; a supply line for supplying the large-lot mash product in a bulk form; a group of equipments for processing, mixing and packing the primary raw material and secondary raw material supplied from each of said tank through said supply lines, the mash intermediate product supplied through said supply lines and/or the bulk intermediate product get out of said small containers; and an automated warehouse for storing said small containers.

The small-lot mash product is preferably contained in the small container because use of the small container facilitates management of the lot of product; the large-lot mash product may be stored in the tank.

In the present invention, said small container preferably has a capacity of 1 to 2 ton.

The small container having a capacity of 1 to 2 ton facilitates shipping work and management of a lot of product because the shipping amount of the product is 1 ton at minimum and the product is shipped by 1 ton in many cases.

In the present invention, said mixing equipment preferably includes a mixing container in which the secondary raw material, intermediate product or product after being weighed are contained.

A method for producing animal feed according to the present invention is a method for producing animal feed by receiving, mixing and processing various materials comprising steps of: receiving the various materials in small containers; transferring said containers in an automated warehouse to be stored; transferring said small containers containing the materials corresponding to the product out of said automated warehouse and transferring to a mixing equipment; mixing the materials at said mixing equipment; containing the mixed product in small containers; and transferring said containers in said automated warehouse to be stored.

A method for producing animal feed according to another embodiment of the present invention is a method for producing animal feed by receiving, mixing and processing various materials comprising steps of: receiving the various materials in small containers respectively; transferring said containers in an automated warehouse to be stored; transferring said small containers containing the materials corresponding to the product from said automated warehouse to a mixing equipment; mixing the materials at said mixing equipment; containing the mixed product in small containers; transferring said containers containing the mixed product to said automated warehouse to be stored; transferring said small containers containing the mixed product from said automated warehouse to a processing equipment; processing the mixed product in the processing equipment; containing the processed mixed product in small containers; and transferring said small containers containing the processed mixed product to the automated warehouse to be stored.

A method for producing animal feed according to still another embodiment of the present invention is a method for producing animal feed by receiving, mixing and processing various materials comprising steps of: receiving the primary raw material in a tank; discharging the primary raw material from said tank and processing into an intermediate product; containing the processed intermediate product in small containers; transferring said small containers containing the processed intermediate product to an automated warehouse to be stored; receiving the secondary raw material in a small container; transferring the small containers to the automated warehouse to be stored; transferring said small containers containing the processed intermediate product and small containers containing the secondary raw material from the automated warehouse to a mixing equipment; mixing the processed intermediate product and the secondary raw material at said mixing equipment to produce a mixed product; containing the mixed product in small containers; and transferring said containers containing the mixed product to said automated warehouse to be stored.

A method for producing animal feed according to the invention may further comprises steps of: transferring the small containers containing the mixed product from the automated warehouse to a pelletizing equipment; pelletizing the mixed product to produce a pellet product; containing the pellet product in small containers and transferring said small containers containing the pellet product to said automated warehouse to be stored.

A method for producing animal feed according to the invention may further comprises steps of: transferring the small containers containing the pellet product and small containers containing a flake product from said automated warehouse a bulk mixing equipment; mixing the pellet product and the flake product at said bulk mixing equipment to produce a bulk product; containing the bulk product in small containers; and transferring the small containers containing the bulk product to said automated warehouse to be stored.

A method for producing animal feed according to still another embodiment of the present invention is a method for producing animal feed by receiving, mixing and processing various materials comprising steps of: receiving the primary raw material in a tank; discharging the primary raw material and processing into an intermediate product; receiving a mash intermediate product in a tank; receiving a bulk intermediate product in small containers; transferring said small containers containing the bulk intermediate product to an automated warehouse to be stored; receiving the secondary raw material in a tank; discharging the mash intermediate product and the secondary raw material from each tank and transferring to a mixing equipment; mixing the mash intermediate product and the secondary raw material at said mixing equipment to produce a mixed product; containing the mixed product in small containers; and transferring said containers containing the mixed product to said automated warehouse to be stored.

A method for producing animal feed according to the invention may further comprises steps of: transferring the small containers containing the mixed product to a pelletizing equipment; pelletizing the mixed product to produce a pellet product; containing the pellet product in small containers; and transferring said containers containing the pellet product to said automated warehouse to be stored.

A method for producing animal feed according to the invention may further comprises steps of: transferring the small containers containing the pellet product and the small containers containing the flake product from said warehouse to a bulk mixing equipment; mixing the pellet product and the flake product in said bulk mixing equipment to produce a bulk product; containing the bulk product in small containers; and transferring said containers containing the bulk product to said automated warehouse to be stored.

A method for producing animal feed according to still another embodiment of the present invention is a method for producing animal feed by receiving, mixing and processing various materials comprising steps of: receiving the primary raw material in a tank; discharging the primary raw material and processing into an intermediate product; receiving a mash intermediate product in a tank; receiving a bulk intermediate product in small containers; transferring the small containers containing the bulk intermediate product to an automated warehouse to be stored; receiving the secondary raw material in a tank; discharging the mash intermediate product and the secondary raw material from each tank and transferring to a mixing equipment; mixing the mash intermediate product and the secondary raw material at said mixing equipment to produce a mixed product; containing a bulk mixed product and a small-lot mash mixed product in small containers respectively; transferring said containers to said automated warehouse to be stored; and receiving a large-lot mash mixed product in each of a product tank and a palletizing tank.

A method for producing animal feed according to the invention may further comprises steps of: discharging the mixed product from said pelletizing tank and transferring to a pelletizing equipment; pelletizing the mixed product to produce a pellet mixed product; containing the pellet mixed product in small containers; and transferring said small containers containing the pellet mixed product to said automated warehouse to be stored.

A method for producing animal feed according to the invention may further comprises steps of: transferring the small containers containing the pellet mixed product and the small containers containing the flake product from said automated warehouse to a bulk mixing equipment; mixing the pellet mixed product and the flake product at said bulk mixing equipment to produce a bulk mixed product; containing the bulk mixed product in small containers, and transferring said small containers containing the bulk mixed product to said automated warehouse to be stored.

### Effect of the Invention

As described above, according to the present invention, an animal feed producing plant and method having improved traceability of the material can be provided. And, it facilitates expansion, removal and contraction of the equipment and is also available for a small-lot production of various kind products.

### Brief Description of the Drawings

Fig.1 is a plan drawing schematically showing a structure of the first floor of the animal feed producing plant according to the present invention;
Fig.2 is a plan drawing schematically showing a structure of the forth floor of the animal feed producing plant according to the present invention;
Fig.3 is a side-section drawing schematically showing a structure of a building of the animal feed producing plant according to the present invention;
Fig.4 is a side drawing schematically showing the primary raw material receiving equipment;
Figs.5 are drawings schematically showing a structure of the mixing equipment; Fig.5(A) is a side drawing and Fig.5(B) is a front drawing;
Fig.6 is a side drawing showing the pelletizing equipment;
Fig.7 is a flowchart showing one embodiment of an animal feed producing method according to the present invention;
Fig.8 is a flowchart showing another embodiment (using the small containers and the tank together) of the mixed animal feed producing method according to the present invention;
Fig.9 is a flowchart showing the raw material receiving and intermediate processing process (S11) of the flowchart of Fig.8;
Fig.10 is a flowchart showing the raw material mixing process (S12, in Level 1) of the flowchart of Fig.8;
Fig.11 is a flowchart showing the raw material mixing process (S12, in Level 2 and Level 3) of the flowchart of Fig.8;
Fig.12 is a flowchart showing the pelletizing process (S14, Level 1, Level 2 and Level 3) of the flowchart of Fig.8;
Fig.13 is a flowchart showing the bulk mixing process (S16, Level 1, Level 2 and Level 3) of the flowchart of Fig.8;
Fig.14 is a drawing schematically showing the animal feed producing plant (Level 1) according to the present invention;
Fig.15 is a drawing schematically showing the mixed animal feed producing plant (Level 2) according to the present invention; and
Fig.16 is a drawing schematically showing the mixed animal feed producing plant (Level 3) according to the present invention.

### Detailed Description of Embodiment of the Invention

Hereinafter, a preferred embodiment of animal feed producing plant and method of the present invention will be concretely described with reference to the drawings.

First, an animal feed producing method will be described briefly.

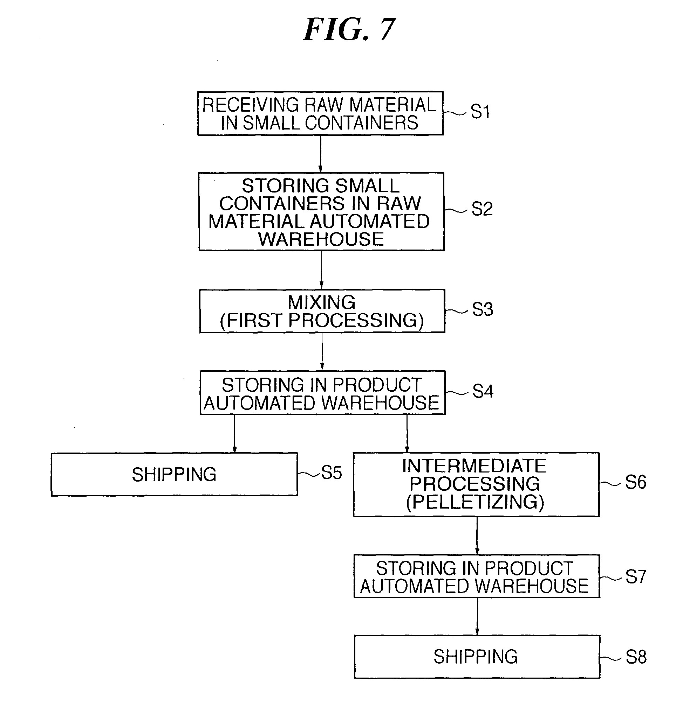

Fig.7 is a flowchart showing one embodiment of an animal feed producing method according to the present invention.

First, each raw material is received in small containers after preprocessing (removing of foreign material, crushing and the like) (S1), and the small containers are transferred to a material warehouse (automated warehouse) through a transfer line to be stored (S2). Depending on a production plane, the raw material in the small container is weighed precisely and then stored in a material and intermediate product warehouse again. When mixing, the small containers containing the raw materials corresponding to the kind of the product are selected and transferred from the material warehouse to a mixing section through a transfer line, in which the raw materials are mixed (S3) to produce a mixed product. The mixed product is contained in product containers (small containers). The small containers are transferred to a product warehouse (automated warehouse) through a transfer line to be stored (S4). The mixed product is shipped as needed (S5).

On the contrary, when a secondary processing (pelletizing and the like) is needed, the small containers containing the mixed product to be processed are transferred from the product warehouse to a processing section through a transfer line, in which the mixed product is subjected to the secondary processing (S6) to produce a secondary processed mixed product. The secondary processed mixed product is contained in product containers (small containers). The small containers are transferred to an intermediate product and product warehouse through a transfer line to be stored (S7). The product is shipped as needed (S8).

Next, an animal feed producing plant for performing the aforesaid animal feed mixing method will be described.

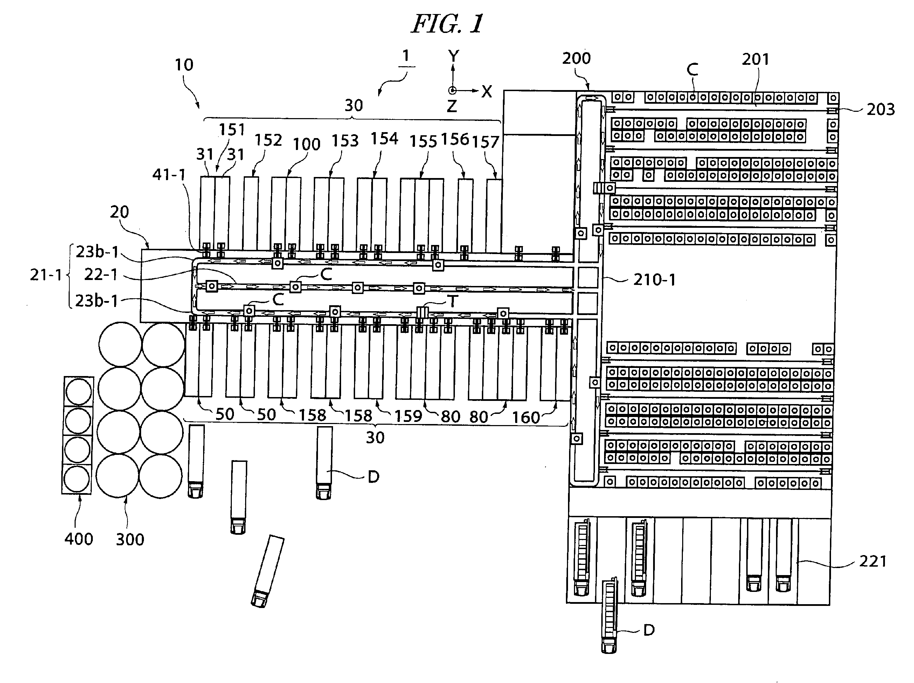

Fig.1 is a plan drawing schematically showing a structure of the first floor of the animal feed producing plant according to the present invention.

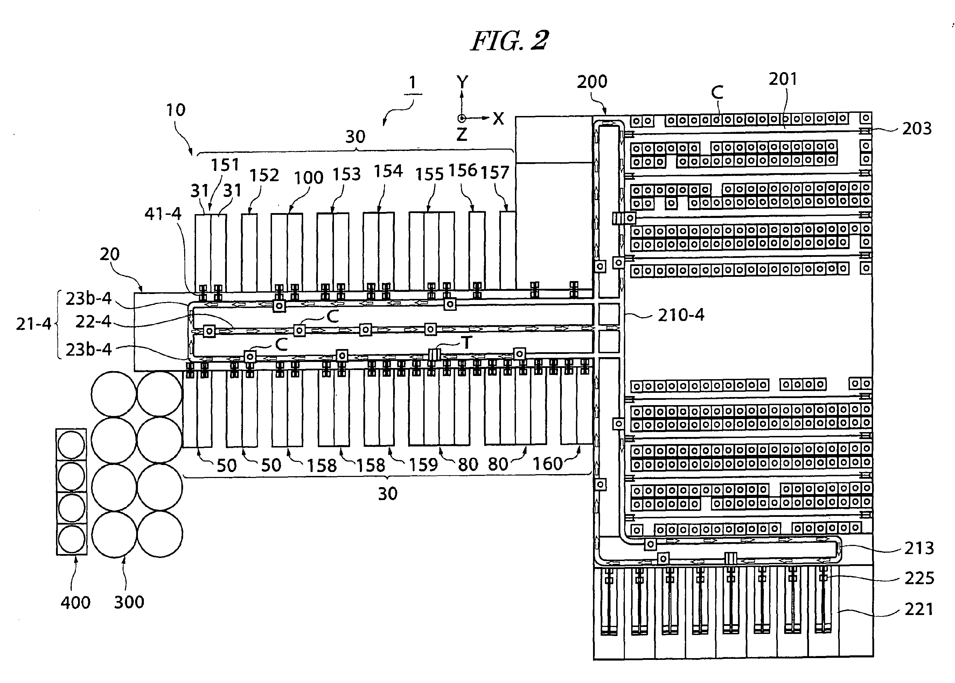

Fig.2 is a plan drawing schematically showing a structure of the forth floor of the animal feed producing plant according to the present invention.

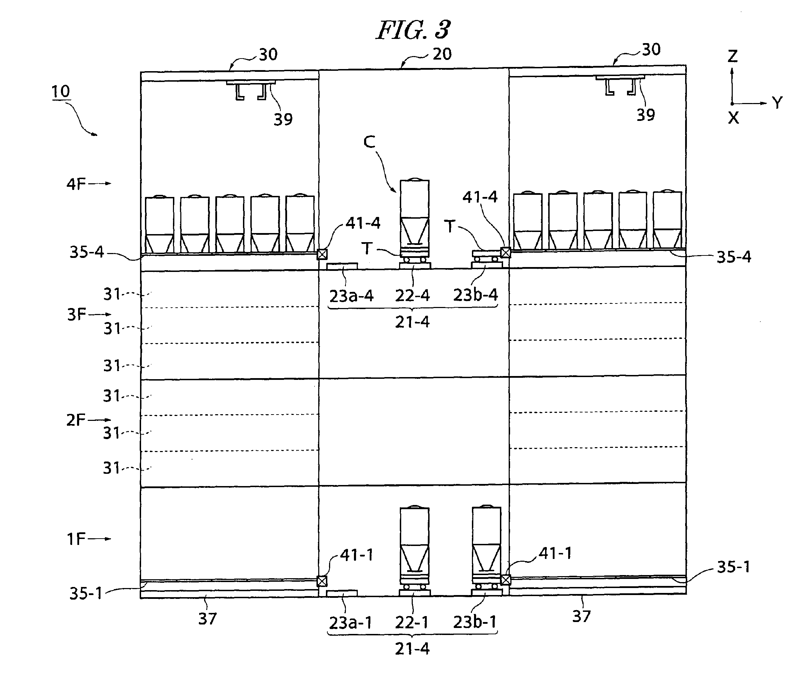

Fig.3 is a side-section drawing schematically showing a structure of a building of the animal feed producing plant according to the present invention.

The animal feed producing plant 1 has a processing area 10 and a warehouse area (automated warehouse) 200 which are adjacent each other, as shown in Figs.1 and 2. The processing area 10 has a building 20 in which transfer lines 21 for transferring small containers C containing a raw material, intermediate product or product are laid; and a group 30 of processing equipments including a mixing equipment, processing equipment, packaging equipment and the like, connected to both sides of the building 20. The small containers C can be transferred between the building 20 and the automated warehouse 200.

A structure of the building 20 will be described.

The building 20 has four floors. As shown in Fig.3, the first floor 1F is used for temporary storing and transferring of the small containers C containing a raw material or product; the second floor 2F and the third floor 3F are used for connecting the equipments; and the forth floor 4F is used for temporary storing and transferring of the small containers C containing a raw material or product. Arrangement of the container transfer lines 21 on plural floors allows improvement in transfer efficiency.

On the first floor 1F and forth floor 4F, as shown in Figs.1 and 2, the transfer lines 21-1 and 21-4 extending in the length direction of the building 20 are laid on the plane. At both sides of the transfer lines 21, the group 30 of processing equipments is disposed.

Each of the transfer lines 21 contains two circulation lines extending in the length direction of the building 20. Each of the circulation line has a carry-in path 22 extending from the building 20 to the automated warehouse 200 and carry-out paths 23a and 23b extending from the warehouse 200 to the building 20. The carry-in path 22 is common to both the circular lines 21. At the outside of the carry-out paths 23a and 23b, the group 30 of processing equipments is arranged. This positional relationship allows an arrangement of a number of the processing equipments. The small containers C can be transferred by a radio-guided self-propelled carriage T guided along the each of the lines 22 and 23, for example.

The automated warehouse 200 is of any conventionally used automated warehouse. As shown Figs.1 and 2, the automated warehouse 200 has a storage place 201 in which the plural small containers C are stored and plural lifts 203 for transferring the small containers C in the storage place 201. And, at the first and forth floors, transfer lines 210-1 and 210-4 coupled to the transfer lines 21-1 and 21-4 in the building 20, respectively, are laid. And, on the forth floor, a product shipping line 213 coupled to the transfer line 210-4 is laid (shown in Fig.2).

On the first floor, plural shipping ports 221 for shipping products are disposed. The shipping ports 221 are allocated according to the types of the product, for example, a bulk product, product packed with a TB (transfer bag), product filled in a container, product packed with a paper bag and the like. On the forth floor, a crane 225 is provided every the ports 221. Each of the product is transferred by the crane 225 from the forth floor to the corresponded port 221 of the first floor.

The group 30 of processing equipments will be described.

The group 30 of processing equipments is for carrying out various processing such as mixing, processing, packing and the like, and is connected to the second and third floors of the building 20. Each of the processing equipments is constructed by unitizing plural unit structures 31. That is, the processing equipment connected to one floor (deck) is composed of plural unit structures 31 assembled in horizontal and vertical directions, in which one to four unit structures 31 are arranged in the length direction of the building 20 (X direction) and three unit structures 31 are arranged in the height direction of the building 20 (Z direction). The unit structure 31 has a horizontally long rectangular solid shape of a marine container size (2m×2m×10m or 2.4m×2.4m×12m).

On the first and forth floors of the group 30 of processing equipments, as shown in Fig.3, container storage places 35-1 and 35-4 in which 20 of the small containers C are disposed on a plane (X-Y directions) are provided, respectively. And, on the first floor 1F, a chain conveyer 37 is laid for transferring the small container C in the X and Y directions in the storage place 35-1. On the forth floor, a catcher crane 39 and conveyer are provided for transferring the small container C in the X and Y directions in the storage place 35-4.

At each storage place 35, a container delivery and receipt port is provided. The container delivery and receipt port is communicated with a container delivery and receipt port of each carry-out path 23 by a berth 41 so that the small containers C can be transferred between the carriage T on the each carry-out path 23 and the storage places 35.

Hereinafter, a primary raw material receiving equipments 50, material mixing equipment 80 and palletizing equipment 100, which are main processing equipments, will be described.

First, the primary raw material receiving equipment 50 will be described. The secondary raw material receiving equipment (shown by 128 in Figs. 1 and 2) has the same structure.

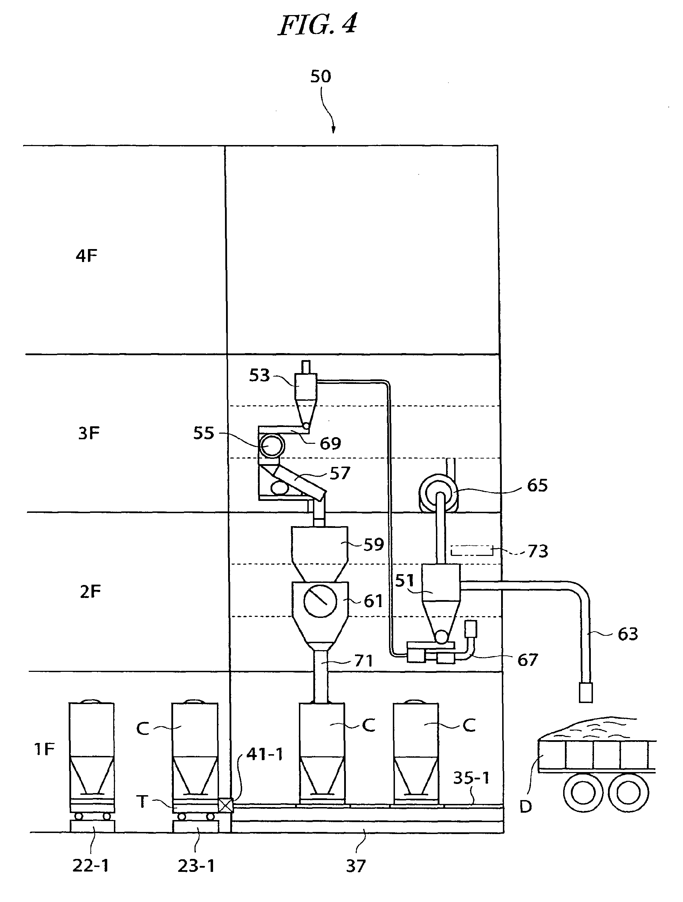

Fig.4 is a side drawing schematically showing the primary raw material receiving equipment.

In the primary raw material receiving equipment 50, a bulk primary raw material (field corn in a case of primary raw material, gluten feed, defatted bran and secondary product in a case of secondary raw material) is pneumatically transferred from the dump truck to the small containers C to be stored after removing foreign material and being weighed. The raw material receiving equipment 50 comprises a first cyclone 51 on the second floor, a second cyclone 53, a magnet 55 and a sifter 57 on the third floor, and a measuring hopper 59 and a measuring apparatus 61 on the second floor in the processing order.

The raw material is discharged from the bed of the dump truck D through a raw material receipt port 63 and collected into the first cyclone 51. The first cyclone 51 swirls the bulk raw material containing air at high speed by a suction blower 65 to collect the raw material spun down along the inside wall by centrifugal force. This separates air from the bulk raw material.

When the primary raw material is stored in a large-size tank 300 as described later, the primary raw material is supplied to the large-size tank 300 through a supply line 73 extending from the first cyclone 51 to the large-size tank 300.

The raw material collected by the first cyclone 51 is pneumatically transferred to the secondary cyclone 53 by a force feeder 67. At the secondary cyclone 53, air is separated from the raw material in the same way. The raw material collected by the secondary cyclone 53 is transferred to a position above the magnet 55 by a conveyer screw 69 and then dropped on the magnet 55 by gravity to remove contaminants such as nail from the raw material. Then, the raw material is filtered by the sifter 57 to remove foreign material and wood piece.

The raw material from which foreign material is removed is charged in the measuring hopper 59 and weighed by the measuring apparatus 61. After measuring, a damper of the hopper 59 is opened so that the raw material is discharged from the hopper 59 and received in the small containers C placed on a predetermined position in the storage place 35-1 of the first floor through a discharge chute 71.

The small container C has a storage space with the upper opening being opened and closed by a lid and the under opening being opened and closed by the damper. Since the storage space has a conically-shaped bottom portion, the raw material hardly remains in the container. The small container C has a capacity of 1.5 to 10.0m³, for example. In this embodiment, since the small container C is assigned to every types of the raw material, mixing of the raw material of different lots can be prevented.

The small containers C containing the raw material are transferred to the container delivery and receipt port by the chain conveyer 37 of the first floor and set on the carriages T on the carry-out path 23-1 of the transfer line through the berth 41-1. And, the small containers C are transferred to the automated warehouse 200 through the carry-out path 23-1 and then the carry-in path 22-1 to be stored.

As described above, since each of the raw material is stored in the automated warehouse as a small container unit, precise lot management and stock management become possible to secure traceability of the raw material.

Next, the mixing equipment 80 will be described.

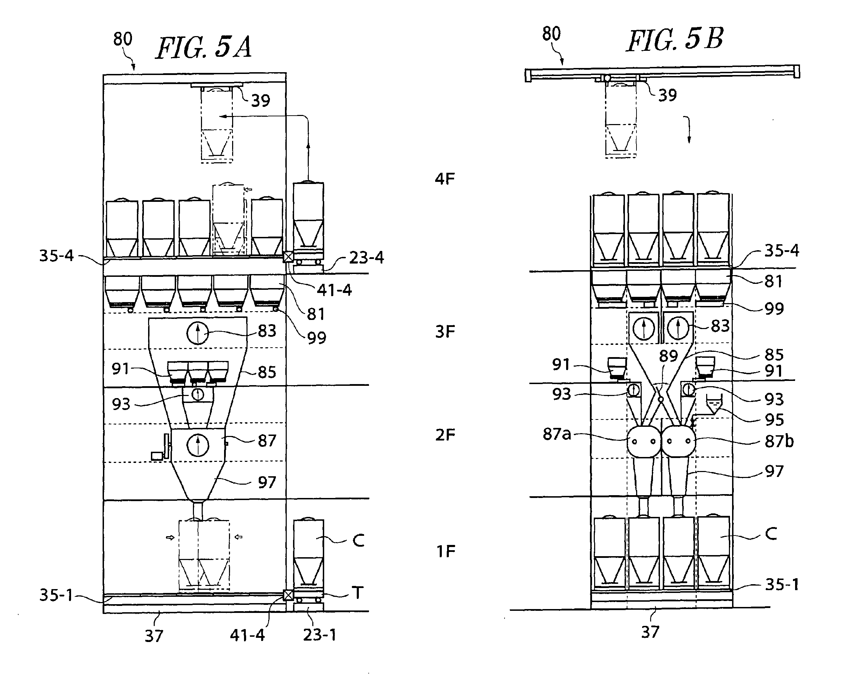

Figs.5 are drawings schematically showing a structure of the mixing equipment; Fig.5(A) is a side drawing and Fig.5(B) is a front drawing.

In the mixing equipment 80, the primary raw material and secondary raw material, contained in the small containers C stored in the automated warehouse 200, are mixed with a predetermined amount ratio corresponded to the product to produce a product. The mixing equipment 80 comprises a primary raw material or secondary raw material receiving hopper 81, a measuring apparatus 83 and a chute 85 on the third floor and mixing mixers 87 on the second floor in the processing order.

The primary raw material containers and secondary raw material containers are transferred to the forth floor in the automated warehouse and then to the mixing equipment 80 through the carry-out path 23-4. And then, the containers are transferred to the storage place 35-4 through the berth 41-4 and temporarily stored.

In this case, since the needed amount of each primary raw material and secondary raw material can be supplied from the automated warehouse as a container unit, it makes possible to meet both mass production and small production. In a case of the primary raw material of large-lot product, the primary raw material may be supplied using another supply line (pneumatic conveying system or conveyer).

The primary raw material and secondary raw material are charged into each of the raw material hoppers 81 from the containers C. Under each hopper 81 is mounted a measuring apparatus 83. The primary and secondary raw materials charged into each hopper 81 are transferred to the each measuring apparatus 83 by a table feeder 99 to be weighed respectively. After being weighted, each material is dropped in either one of the mixing mixers 87 through the chute 85. In a case of organic product, the materials are dropped in the mixing mixer 87a for an organic product; in a case of nonorganic product, the materials are dropped in the mixing mixer 87b for nonorganic product. The chute 85 diverges to extend to the mixing mixer 87a for an organic product and to the mixing mixer 87b for a nonorganic product. Selection of the mixing mixers 87 is controlled by the damper 89 mounted at the diverging portion of the chute 85.

Each mixing mixer 87 is provided with a hopper 91 for mixing a small amount of material (for example, premix material), a measuring apparatus 93 for the small amount of material and a service tank 95 for further mixing molasses, fat and the like.

The primary and secondary raw materials and the small amount of material, dropped in the mixing mixer 87, are mixed to produce a mixed product. The mixed product is contained in the small product containers C placed on the predetermined position in the storage place 35-1 of the first floor through the product chute 97.

The product containers C containing the mixed product are transferred to the container delivery and receipt port of the first floor by the chain conveyer 37 and then shifted on the carriage T on the carry-out path 23-1 through the berth 41-1. And then, the containers C are transferred to the automated warehouse 200 by the conveyer 22-1 to be stored.

Next, the pelletizing equipment 100 will be described.

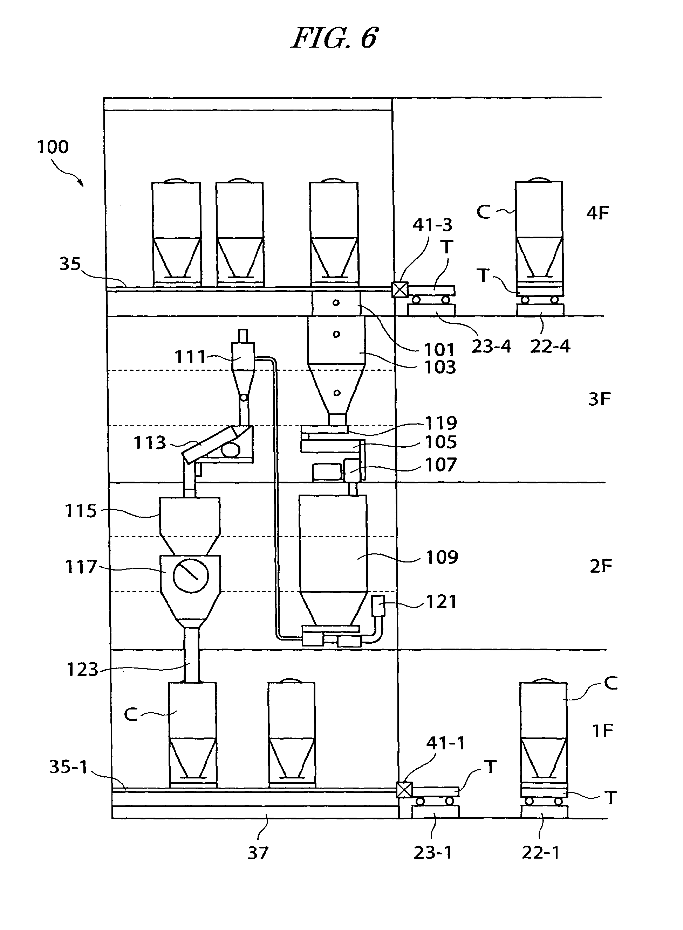

Fig.6 is a side drawing showing the pelletizing equipment.

In the pelletizing equipment 100, the mixed product, contained in the small containers C stored in the automated warehouse 100, is pelletized. The pelletizing equipment 100 comprises a product receiving port 101, a hopper 103, a steam adding mixer 105 and a pellet mill 107 on the third floor, a cooler 109 on the second floor, a cyclone 111 and a shifter 113 on the third floor, and a measuring hopper 115 and a measuring apparatus 117 on the second floor in the processing order.

The product containers C are transferred to the forth floor in the automated warehouse 200 and then to pelletizing equipment 100 through the carry-out path 23-4. Then, the product containers C are transferred to the storage place 35-4 through the berth 41-4 and then to the material receipt port 101 from the storage place by a conveyer (not shown), at which the content of the containers C is charged into the hopper 103 through the port 101. Then, the content is charged into the steam adding mixer 105 by the feeder 119 to be heated and humidified and then to the pellet mill 107 to be pelletized. The pellets fall down on the cooler 109 by gravity to be cooled and then pneumatically transferred to the cyclone 111 by a force feeder 121.

After separating air from the pellets by the cyclone 111, the pellets fall down on the shifter 113 by gravity to be filtered. The filtered pellets fall down in the measuring hopper 115 by gravity to be weighed by the measuring apparatus 117. Then, the weighed pellets are contained in the small containers C placed on a predetermined position on the storage place 35-1 of the first floor through the product chute 123.

The small containers C containing the pellet product are transferred to the carry-out path 23 of the transfer line through the berth 41-1 and then to the automated warehouse through the carry-in path 22 from the carry-out path 23 to be stored.

Referring to as Fig.2, a shipping method of the product will be described.

First, in the automated warehouse 200, the containers containing the product to be shipped are transferred to the transfer line 210-4 by the lift 203 and to a position above the predetermined shipping port 221 through the shipping line 213 from the transfer line 210-4. And, the container C is lowered to the shipping port 221 of the first floor by the crane 225 and then shifted on the truck D to be shipped.

The group of processing equipments includes another processing equipments, as shown in Figs. 1 and 2, including:
a flaking equipment 151 in which the mixed product is subjected to a heat treatment and then pressed into a flat shape (flake shape);
a boiler equipment 152 for generating steam used for the pelletizing equipment and the like;
a TB packing equipment 153 and paper bag packing equipment 154 for packing the product in a transfer bag and paper bag, respectively;
a secondary mixing equipment 155 in which a special mixing except for the aforesaid mixing is carried out, for example, a pellet product is mixed with a flake product;
a cleaning equipment 156 for cleaning the small containers C when a material or product to be contained is changed;
a power equipment 157 for supplying power to each equipment; and
a primary raw material crushing equipment 159 and secondary raw material crushing equipment 160 in which the primary raw material and secondary raw material are crushed and filtered, respectively.

Each of these equipments is constructed by unitizing plural dividable unit structures. Accordingly, it is easy to disassemble and assemble the equipment so that the equipment can be easily expanded, contracted and changed in position. And, the unit structure having a marine container size allows easy handling on both the ocean and land.

In addition, in a case of a large-lot primary raw material, the raw material may be stored in the large-size tank 300.

The large-size tank 300 may be disposed at side of the building 10. And, between the large-size tank 300 and the group 30 of processing equipments, transfer lines 73 for transferring the small containers or pneumatic transferring lines are provided.

Furthermore, a liquid-material tank 400 for storing fat or molasses may be provided. Such liquid-material tank 400 may be also disposed at side of the building 10. And, between the liquid-material tank 400 and the processing unit equipments, a liquid material supplying line 73 is provided. The liquid material is supplied to the processing equipment when a high-value added animal feed is produced, for example.

In the aforesaid embodiments, each equipment for carrying out various processing including mixing, processing, bagging and the like is constructed by unitizing the unit structures 31 each having the same size as the marine container; but, not limited thereto. And, the embodiments show a method in which the primary raw material, secondary raw material, intermediate product and product are handled in a state contained in the small containers. However, handling the material and product with being contained in the small containers may bring disadvantages in view of equipment management depending on scale of the plant and variety of the product. Accordingly, usage of the small containers with the tank together makes it possible to reduce plant cost and to improve efficiency of mixed animal feed production. Hereinafter, an embodiment of method using the small containers and tank together will be described.

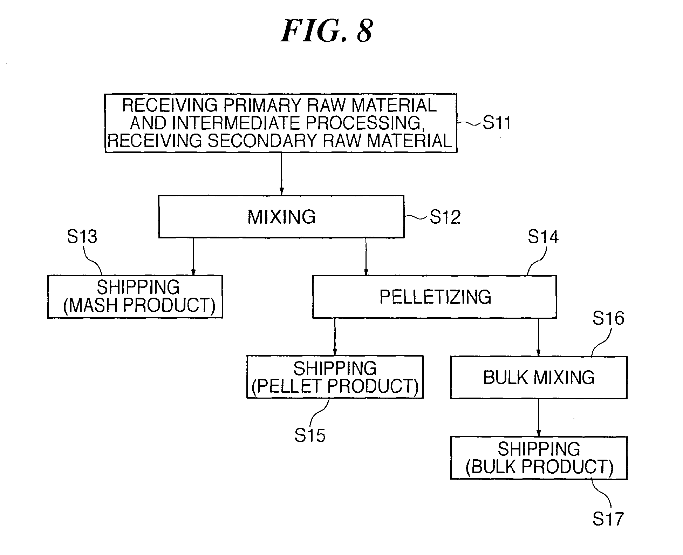

Fig.8 is a flowchart showing another embodiment (using the small containers and the tank together) of the mixed animal feed producing method according to the present invention.

First, the primary raw material is received, processed into an intermediate product (mash intermediate product, flake intermediate product) and then stored in the small containers or tank. At the same time, the secondary raw material is received and then stored in the small containers or tank (S11). And, the small containers containing the materials (mash intermediate product and secondary raw material) corresponding to the product are transferred to the mixing equipment, or the materials corresponding to the product are transferred to the mixing equipment from each tank, and then the materials are mixed (S12) to produce a mash mixed product. The mash mixed product is contained in the small containers or stored in the tank. If needed, the mash mixed product is shipped (S13). On the contrary, when it is needed to be pelletized, the mash mixed product is transferred to the pelletizing equipment to be pelletized (S14). The pellet mixed product is contained in the small containers and shipped as needed (S15).

In a case of bulk mixing, the small containers containing the pellet mixed product and the small containers containing the flake intermediate product are transferred to a bulk mixing equipment to be mixed to produce a bulk mixed product (S16). The bulk mixed product is contained and stored in the small containers, and shipped as needed (S17).

This mixed animal feed producing method includes the following three levels according to whether the raw material, intermediate product or product is contained in either the small containers or tank;
(1) Level 1: the primary raw material is stored in the tank; and the secondary raw material, intermediate product and product are contained in the small containers, respectively;
(2) Level 2: the primary raw material and secondary raw material are stored in each tank; the mash intermediate product is stored in the tank; the bulk intermediate product is contained in the small containers; and the product are contained in the small containers; and
(3) Level 3: the primary raw material and the secondary raw material are stored in each tank; the mash intermediate product and product are stored in each tank in a case of a large-lot; the mash intermediate product and product are contained in each small container in a case of a small-lot; and the bulk intermediate product and product are contained in each small container.

The small container used in each Level has a capacity of 1 to 2 ton, for example.

Primary processes of each Level will be described.

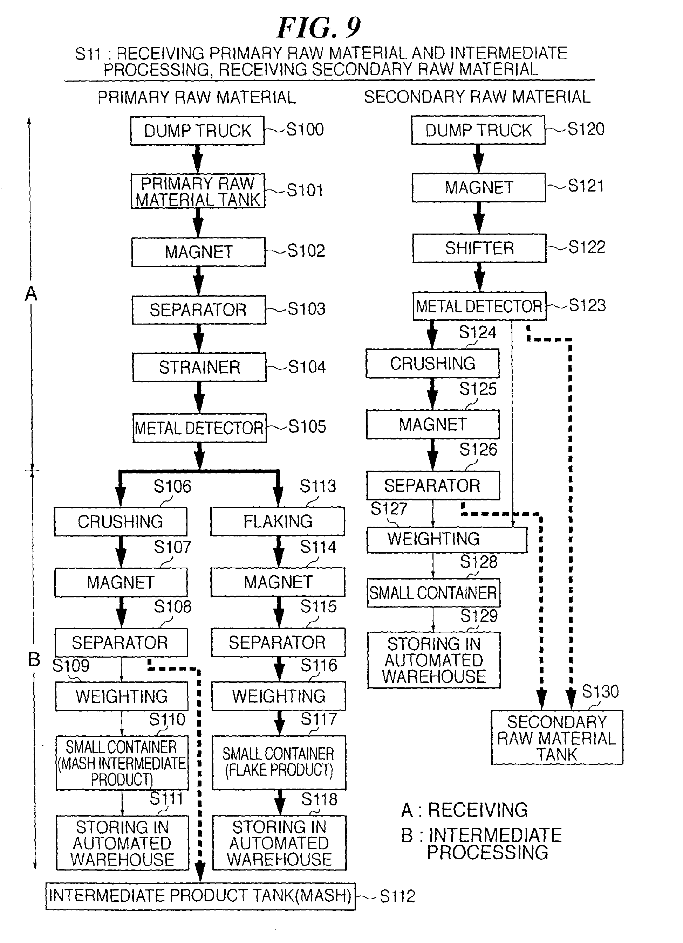

Fig.9 is a flowchart showing the raw material receiving and intermediate processing process (S11) of the flowchart of Fig.8.

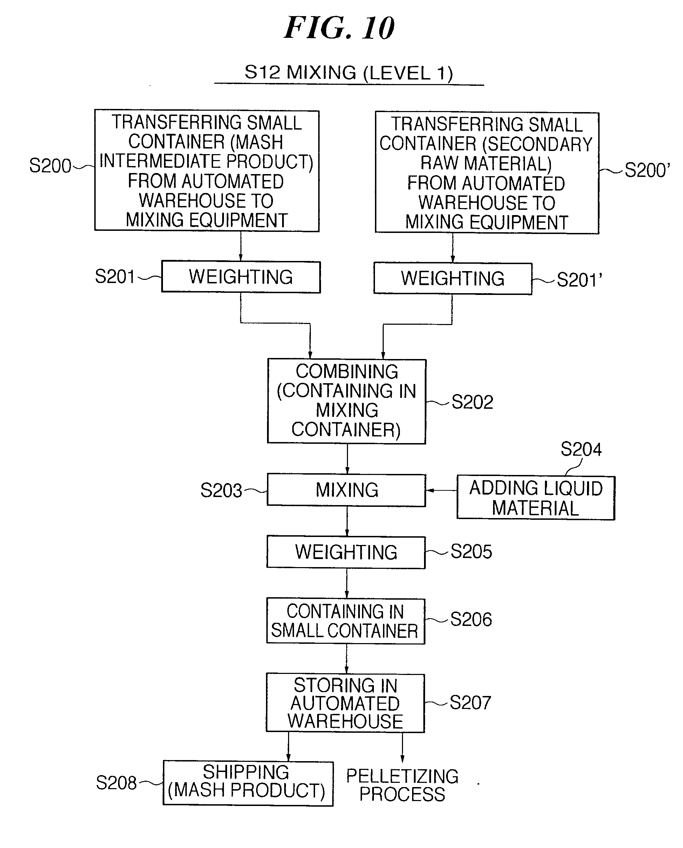

Fig.10 is a flowchart showing the raw material mixing process (S12, in Level 1) of the flowchart of Fig.8.

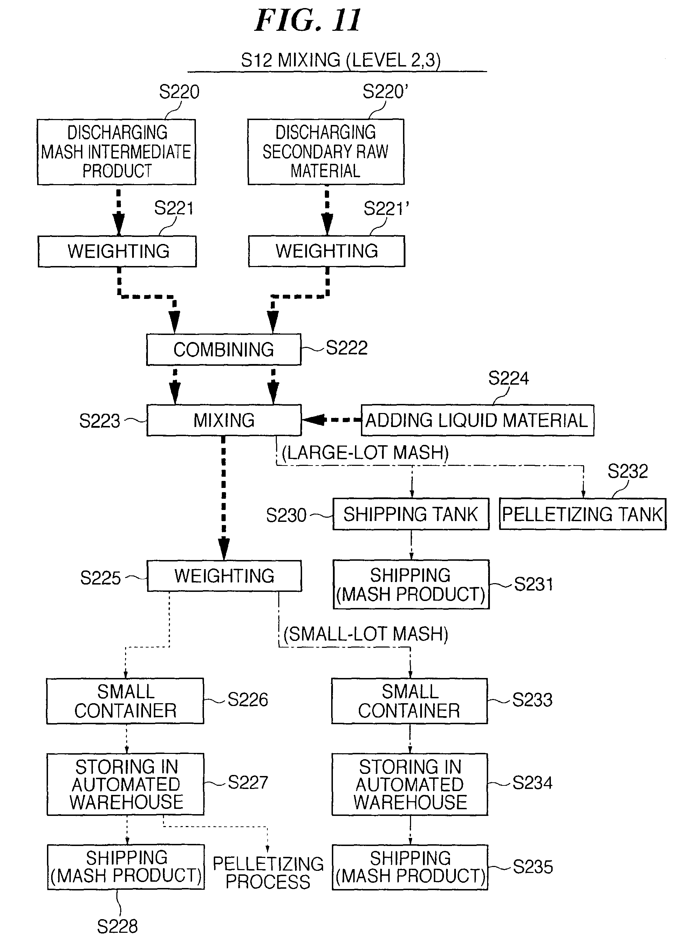

Fig.11 is a flowchart showing the raw material mixing process (S12, in Level 2 and Level 3) of the flowchart of Fig.8.

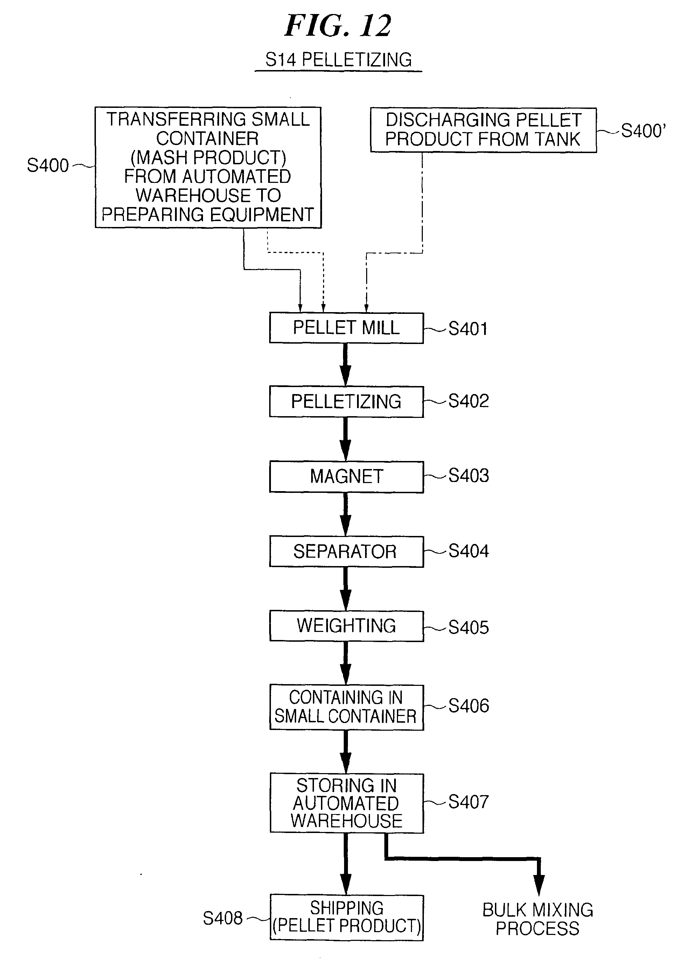

Fig.12 is a flowchart showing the pelletizing process (S14, Level 1, Level 2 and Level 3) of the flowchart of Fig.8.

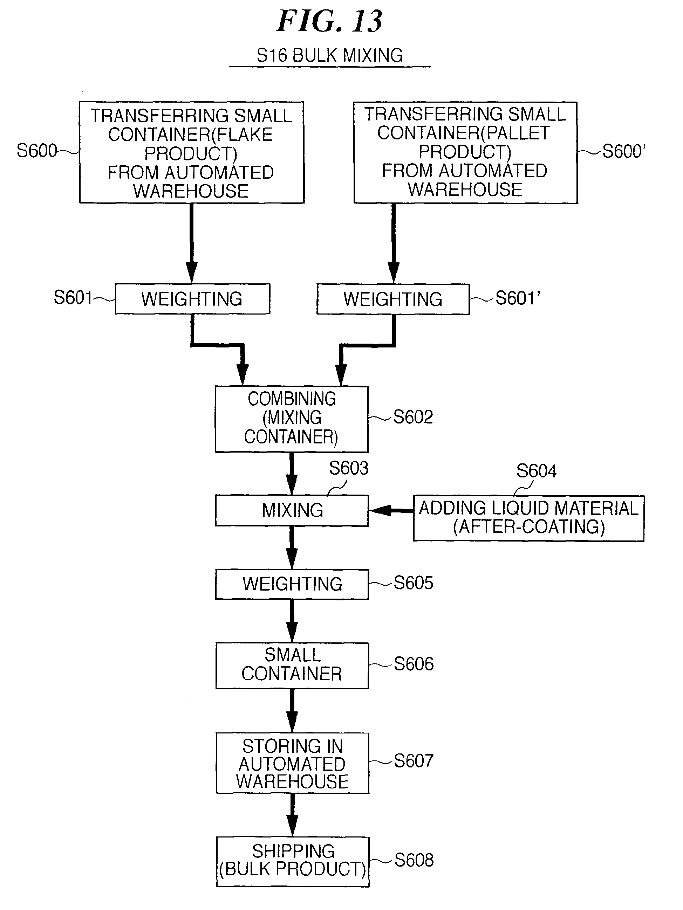

Fig.13 is a flowchart showing the bulk mixing process (S16, Level 1, Level 2 and Level 3) of the flowchart of Fig.8.

In these flowcharts, a thick solid line shows a common processing flow of Level 1, Level 2 and Level 3; a thin solid line shows a processing flow of Level 1; a thick dashed line shows a common processing flow of Level 2 and Level 3; a thin dashed line shows a processing flow of Level 2; and a chain line shows a processing flow of Level 3.

Referring to as Fig.9, the raw material receiving and intermediate processing process (S11) will be described.

The raw material receiving process among the raw material receiving and intermediate processing process is common to Level 1, Level 2 and Level 3. First, the raw material is transferred by a dump truck (S100) and temporarily stored in the primary raw material tank (S101). The primary raw material is discharged from the tank, foreign substance such as nails are removed by the magnet (S102), another foreign material are removed by the separator (S103) and then still another foreign substance such as stone are removed by the strainer (S104). Then, the metal detector checks that the raw material does not contain metal piece (S105). The raw material after removing various foreign substances and checking is subjected to a crushing treatment (S106) or a flaking treatment (S113).

The crushed raw material, subjected to the crushing treatment at S106, is treated for removing foreign substance such as nails by the magnet (S107) and then treated for removing foreign material by the separator (S108) if the raw material contains such foreign substance. By these steps, the raw material is processed into a mash intermediate product. Then, in a case of Level 1, the mash intermediate product (the crushed raw material) is weighed (S109), contained in the small containers (S110) and then stored in the automated warehouse (S111). On the contrary, in case of Level 2 and Level 3, the mash intermediate product (the crushed raw material) is stored in the intermediate product tank (S112).

The flaked raw material, subjected to the flaking treatment at S113, is treated for removing foreign substance such as nail by the magnet (S114) and then further treated for removing foreign material by the separator (S115), in a case of Level 1, Level 2 and Level 3. By these steps, the raw material is processed into a flake intermediate product. Then, the flake intermediate product (the flaked raw material) is weighed (S116), contained in the small containers (S117) and then stored in the automated warehouse (S118).

The steps from S120 to S126 of the secondary raw material receiving process are common to Level 1, Level 2 and Level 3. First, the secondary raw material is transferred by a dump truck (S120), foreign substance such as nails are removed by the magnet (S121) and then filtered by the shifter (S122) to separate a large size material. Then, the metal detector checks that the secondary raw material does not contain metal piece (S123). And, the large size material is subjected to a crushing treatment (S124), treated for removing foreign substance such as nail by the magnet (S125) and then treated for removing foreign material by the separator (S126).

Then, in a case of Level 1, the secondary raw material (including the crushed secondary raw material) is weighed (S127), contained in the small containers (S128) and then stored in the automated warehouse (S129). On the contrary, in a case of Level 2 and Level 3, the secondary raw material (including the crushed secondary raw material) is stored in the secondary raw material tank (S130).

As described above, in each Level, the primary raw material is processed into an intermediate product after stored in the tank temporarily. And, the mash intermediate product is contained in the small containers in a case of Level 1; is stored in the intermediate product tank in a case of Level 2 and Level 3. On the contrary, the flake intermediate product is contained in the small containers in each Level. The secondary raw material is contained in the small containers in a case of Level 1; is stored in the secondary raw material tank in a case of Level 2 and Level 3.

Next, the material mixing process (S12) will be described.

In the process, a way for storing the intermediate product (mash intermediate product and flake intermediate product) and the secondary raw material varies according to the Levels and, therefore the storing way will be described every Level.

Referring to as Fig.10, the material mixing process (S12) in a case of Level 1 will be described.

First, the small containers containing the mash intermediate product, stored in the automated warehouse at S111 of Fig.9, are brought to the mixing equipment (S200), the mash intermediate product is weighed (S201) and then charged in the mixing containers (S202). At the same time, the small containers containing the secondary raw material, stored in the automated warehouse at S129 of Fig.9, are brought to the mixing equipment (S200'), the secondary raw material is weighed (S201') and then charged into the mixing containers (S202). Then, the content of the mixing containers is mixed (S203). The mixture is added with the liquid material (S204) to produce a mash mixed product.

Such produced mash mixed product is weighed (S205), contained in the small containers (S206) and then stored in the automated warehouse (S207). Part of the product is shipped (S208); another is subjected to a pelletizing treatment.

Referring to as Fig.11, the raw material mixing process (S12) in case of Level 2 and Level 3 will be described.

First, the mash intermediate product, stored in the intermediate product tank at S112 of Fig.9, is discharged (S220), weighed (S221) and then charged into the mixing equipment (S222). At the same time, the secondary raw material, stored in the secondary raw material tank at S130 of Fig.9, is discharged (S220'), weighed (S221') and then charged into the mixing equipment (S222). And, the mash intermediate product is mixed with the secondary raw material (S223). The mixture is added with the liquid material (S224) to produce a mash mixed product. The produced mash mixed product is weighed (S225), contained in the small containers (S226) and then stored in the automated warehouse (S227) in a case of Level 2. Part of the product is shipped (S228); another is subjected to a palletizing treatment.

In Level 3, after mixing (S223), the mixture is divided into that for shipping and that for subjecting to a pelletizing treatment in a case of a large-lot product. In a case of shipping, the mash mixed product is stored in the shipping tank (S230) and then shipped (S231). In a case of pelletizing, the mash mixed product is stored in the pelletizing tank (S232). In a case of small-lot product, after being weighed (S225), the mash mixed product is contained in the small containers (S233), stored in the automated warehouse (S234) and then shipped (S235).

As described above, all of the mash mixed product is contained in the small containers in a case of Level 1 and Level 2; a small-lot mash mixed product is contained in the small containers and a large-lot mash mixed product is stored in the tank in a case of Level 3.

Referring to as Fig.12, the pelletizing process will be described.

The small containers containing the mash mixed product, stored in the automated warehouse at S207 of Fig.10 in a case of Level 1, or at S227 of Fig.11 in a case of Level 2, are brought (S400) and the mash mixed product is charged into the pellet mill (S401). In a case of Level 3, the large-lot mash mixed product, stored in the tank at S232 of Fig.11, is discharged (S400') and then charged into the pellet mill (S401). After pelletizing by the pellet mill (S402), the pelletized product is treated for removing foreign substance such as nail by the magnet (S403), treated for further removing foreign material by the separator (S404) to produce a pellet mixed product. Thus produced pellet mixed product is weighed (S405), contained in the small containers (S406) and then stored in the automated warehouse (S407). Part of the product is shipped (S408); another is subjected to a bulk mixing treatment.

Referring to as Fig.13, the bulk mixing process will be described.

The process is common to Level 1, Level 2 and Level 3. First, the small containers containing the flake intermediate product, stored in the automated warehouse at S118 of Fig.9, are brought (S600), the flake intermediate product is weighed (S601) and then charged into the mixing containers (S602). And, the small containers containing the pellet mixed product, stored in the automated warehouse at S407 of Fig.12, are brought (S600'), the pellet mixed product is weighed (S601') and then charged into the mixing containers(S602). Then, the flake intermediate product and pellet mixed product are mixed (S603) in the mixing containers to produce a bulk mixed product. In some cases, the bulk mixed product is added with the liquid material (S604) to produce another type of bulk mixed product on the surface of which the liquid material is penetrated (coated). The bulk mixed product is weighed (S605), contained in the small containers (S606), stored in the automated warehouse (S607) and then shipped as needed (S608).

In the bulk mixing process, a hay cube produced by another processing step may be mixed.

As described above, in each Level, the pellet product and the bulk product produced by mixing the pellet product and the flake product are contained in the small containers, respectively.

Next, a structure of the plant for carrying out the mixed animal feed producing method in each Level and a flow of each material will be described.

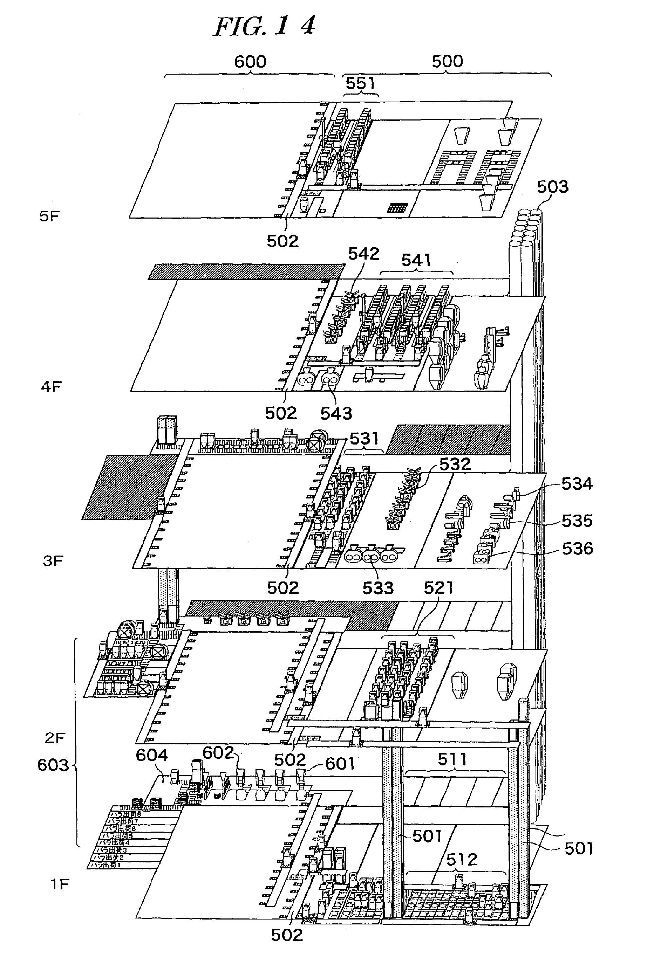

Fig.14 is a drawing schematically showing the animal feed producing plant (Level 1) according to the present invention.

The animal feed producing plant, having five floors, has a processing area 500 and an automated warehouse 600 which are adjacent each other. In this embodiment, the processing area 500 is shown in the right side of the figure and the automated warehouse 600 is shown in the left side of the figure. The automated warehouse is any of conventionally used automated warehouses.

Between the first and second floors of the processing area 500, an elevator 501 is equipped for transferring the containers between the floors. On each floor, a port 502 is provided for delivering and receiving of the containers to and from the automated warehouse 600. The material tank 503 takes a space from the first floor to the forth floor of the processing area.

Each floor of the processing area 500 will be described.

The first floor is provided with a material receiving port 511 for receiving the primary raw material and secondary raw material from the dump truck. The material receiving port 511 is communicated with the material tank 503 by a bulk material supply line (conveyor, pneumatic conveying pipe and the like, not shown). And, a container storage place 512 is also provided for storing the containers temporarily before transferred to the automated warehouse 600. The container storage place 512 is communicated with the port 502 so that the containers can be transferred between the container storage place 512 and the automated warehouse 600.

The second floor is provided with a container storage place 521 in which the mixing containers containing the weighed mash intermediate product and the weighed secondary raw material are movably disposed. The container storage place 521 is communicated with the port 502 so that the small containers can be transferred between the container storage place 521 and the automated warehouse 600.

The third floor is provided with a container storage place 531 in which the mixing containers containing the weighed pellet intermediate product and the weighed flake intermediate product are movably disposed. The container storage place 531 is communicated with the port 502 so that the containers can be transferred between the container storage place 531 and the automated warehouse 600. The third floor is also provided with measuring apparatuses 532 for measuring the mash product and a mixer 533 for mixing the mash product. The measuring apparatus 532 is prepared every material. And, hammer mills 534, pellet mills 535, pressure rolls 536 and the like are further provided. Between the material tank 503, and the hammer mill 534 and the pressure roll 536, a bulk material supply line (not shown) for transferring the bulk material is laid.

The forth floor is provided with a container storage place 541 in which the small containers containing the mash intermediate product and the secondary raw material are movably disposed. The container storage place 541 is communicated with the port 502 so that the small containers can be transferred between the container storage place 541 and the automated warehouse 600. And, measuring apparatuses 542 for measuring the bulk product and mixers 543 for mixing the bulk product are further provided. The measuring apparatus 542 is prepared every material.

The fifth floor is provided with a container storage place 551 in which the small containers containing each of the flake intermediate product and the pellet product are movably disposed. The container storage place 551 is communicated with the port 502 so that the containers can be transferred between the container storage place 551 and the automated warehouse 600.

The automated warehouse 600 is provided with TB packing machines 601 for packing the product in a TB (transfer bag) and paper bag packing machines 602 for packing the product in a paper bag. And, shipping ports 603 for shipping the bulk product and packed product and a cleaning room 604 for cleaning the container are further provided.

Referring to as Figs.8, 9, 10, 12 and 13, in addition to Fig.14, the flow of the each material will be described.

In the material receiving and intermediate processing process (S11, as shown in Fig.9), the primary raw material is received at the material receiving port 511 from the dump truck (S100) and then transferred through the bulk material supply line to the primary raw material tank 503 to be stored temporarily (S101). After removing foreign substance and checking, the primary raw material is discharged from the primary raw material tank 503 and transferred to the hammer mill 534 or the pressure roll 536 on the third floor through the bulk material supply line to be subjected to a crushing treatment (S106) or a flaking treatment (S113) to process into an intermediate product (mash intermediate product or flake intermediate product). The processed mash intermediate product and flake intermediate product are contained in the small containers respectively (S110, S117) and stored in the automated warehouse (S111, S118).

On the other hand, the secondary raw material is received at the material receiving port 511 from the dump truck (S120), and after removing foreign substance and checking, is contained in the small containers (S128) and then stored in the automated warehouse 600 (S129).

In the material mixing process (S12, as shown in Fig.10), the small containers containing the mash intermediate product and the small containers containing the secondary raw material are brought from the automated warehouse 600 (S200, S200') and transferred to the container storage place 541 on the forth floor through the port 502. In the container storage place 541, the small containers are transferred to a predetermined position above the measuring apparatus 532 on the third floor prepared every material. And, the content of the containers falls down on the measuring apparatus 532 by gravity to be weighed (S201, S201').

In the container storage place 521 (the second floor) under the measuring apparatus 532, the mixing container is movably disposed. The mixing container is moved so as to receive the mash intermediate product and the secondary raw material each weighed to have a predetermined mix ratio. The mixed mash intermediate and secondary raw materials are fallen on the mixing container by gravity from the measuring apparatus 532 to be contained (S202).

Then, the mixing container is transferred to the third floor and the content are mixed with the mixer 533 (S203) to produce a mash mixed product. The mash mixed product is weighed (S205), contained in the small container (S206) and then transferred to the automated warehouse 600 to be stored (S207). When shipping, the mash mixed product is shipped in a bulk state or a TB or paper bag packed state packed by the packing machine 601 or 602 (S208). Another is subjected to a pelletizing treatment.

In the pelletizing process (S14, as shown in Fig.12), the small containers containing the mash mixed product are brought from the automated warehouse 600 (S400), the mash mixed product is charged into the pellet mill 535 on the third floor (S401) to be pelletized (S402) to produce a pellet mixed product. The produced pellet mixed product is contained in the small containers (S406) and stored in the automated warehouse (S407). When shipping, the pellet mixed product is shipped in a bulk state or a TB or paper bag packed state packed by the packing machine 601 or 602 (S408). Another is subjected to a bulk mixing treatment.

In the bulk mixing process (S6, as shown in Fig.13), the small containers containing the flake intermediate product and the small containers containing the pellet mixed product are brought from the automated warehouse 600 (S600, S600') and transferred to the container storage place 551 on the fifth floor. In the container storage place 551, the containers are transferred to a predetermined position above the measuring apparatus 542 on the forth floor prepared every material. And, the content of the containers falls down on the measuring apparatus 542 by gravity to be weighed (S601, S601').

In the container storage place 531 (the third floor) under the measuring apparatus 542, the mixing containers are movably disposed. The mixing container is moved so as to receive the flake intermediate product and the pellet mixed product each weighed to have a predetermined mix ratio. The mixed flake intermediate product and pellet mixed products are fallen on the mixing containers by gravity from the measuring apparatus 542 to be received (S602).

Then, the mixing containers are transferred to the forth floor and the content are mixed with the mixer 543 (S603) to produce a bulk mixed product. The bulk mixed product is weighed (S605), contained in the small containers (S606) and then transferred to the automated warehouse 600 to be stored (S607). When shipping, the bulk mixed product is shipped in a bulk state or a TB or paper bag packed state by the packing machine 601 or 602 (S608).

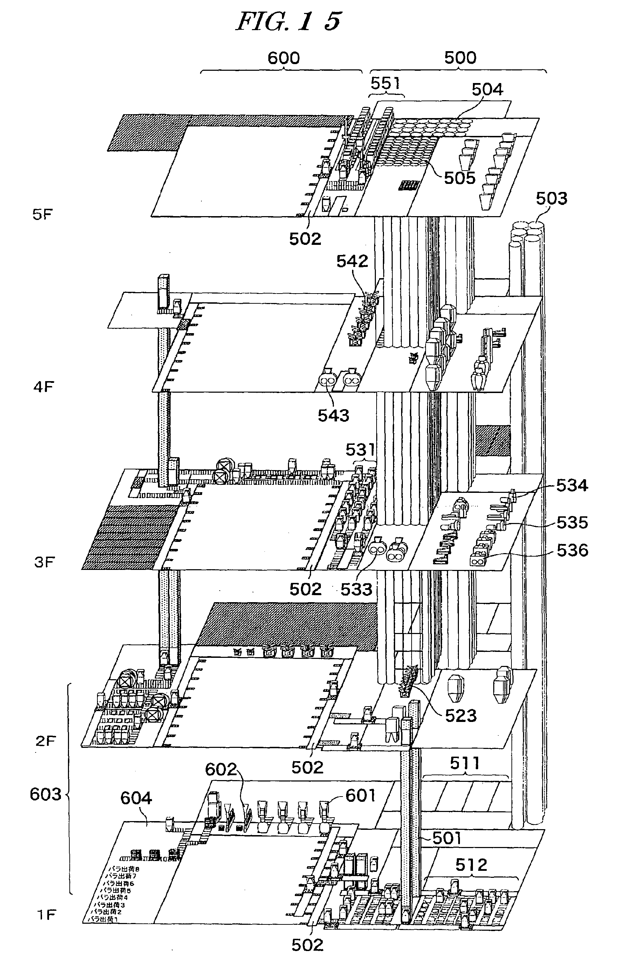

Fig.15 is a drawing schematically showing the mixed animal feed producing plant (Level 2) according to the present invention.

The mixed animal feed producing plant, also having five floors, has a processing area 500 and an automated warehouse 600 which are adjacent each other. In this embodiment, different characteristics from the mixed animal feed producing plant of Fig.14 are described; the same point as the mixed animal feed producing plant of Fig.14 are shown by the same mark and not described.

In case of Level 1, the secondary raw material and mash intermediate product are contained in each small container; in case of Level 2, the secondary raw material and mash intermediate product are stored in the secondary raw material tank and intermediate product tank, respectively. In response, in case of Level 2, the secondary raw material tank 504 storing the secondary raw material and the intermediate product tank 505 storing the mash intermediate product are provided in exchange for the container storage places 541 and 521. The tanks take a space from second floor to the fifth floor of the processing area.

The second floor is provided with measuring apparatuses 523 positioned under the delivery port of the secondary raw material tank 504 and mash intermediate tank 505, which weigh the discharged secondary raw material and mash intermediate product, respectively.

The secondary raw material tank 504 is communicated with the material receiving port 511 on the first floor by bulk material supply lines (conveyor, pneumatic conveying pipe and the like, not shown). And, the intermediate product tank 505 is communicated with the hammer mills 534 on the third floor by bulk material supply lines (not shown).

Referring to as Figs.8, 9, 11, 12 and 13, in addition to Fig.15, the flow of the each material in a case of Level 2 will be described.

In the material receiving and intermediate processing process (S1, as shown in Fig.9), the primary raw material is received at the material receiving port 511 from the dump truck (S100) and then transported to the primary raw material tank 503 through the bulk material supply line to be temporarily stored (S101). After removing foreign substance and checking, the primary raw material is discharged from the primary raw material tank 503 and charged into the hammer mill 534 or the pressure roll 536 on the third floor through the bulk material supply line to be subjected to a crushing treatment (S106) or a flaking treatment (S113) to process into an intermediate product (mash intermediate product or flake intermediate product). The processed mash intermediate product is stored in the intermediate tank 505 through the bulk material supply line (S112). On the other hand, the flake intermediate product is contained in the small containers (S117) and stored in the automated warehouse (S118).

The secondary raw material is received at the material receiving port 511 from the dump truck (S120), and after removing foreign substance and checking, is supplied to the secondary raw material tank 504 through the bulk material supply line to be stored (S130).

In the material mixing process (S12, as shown in Fig.10), the mash intermediate product and secondary raw material are discharged from the intermediate tank 505 and the secondary raw material tank 504, respectively (S220, S220'), after weighing by the measuring apparatus 523 on the second floor (S221, S221'), are charged into to the mixer 533 on the third floor to be mixed (S223) to produce a mash mixed product. The produced mash mixed product is weighed (S224), contained in the small containers (S226) and then transferred to the automated warehouse 600 to be stored (S227). When shipping, the mash mixed product is shipped in a bulk state or a TB or paper bag packed state by the packing machine 601 or 602 (S228).

The pelletizing process (S4) and bulk mixing process (S6) are the same as Level 1.

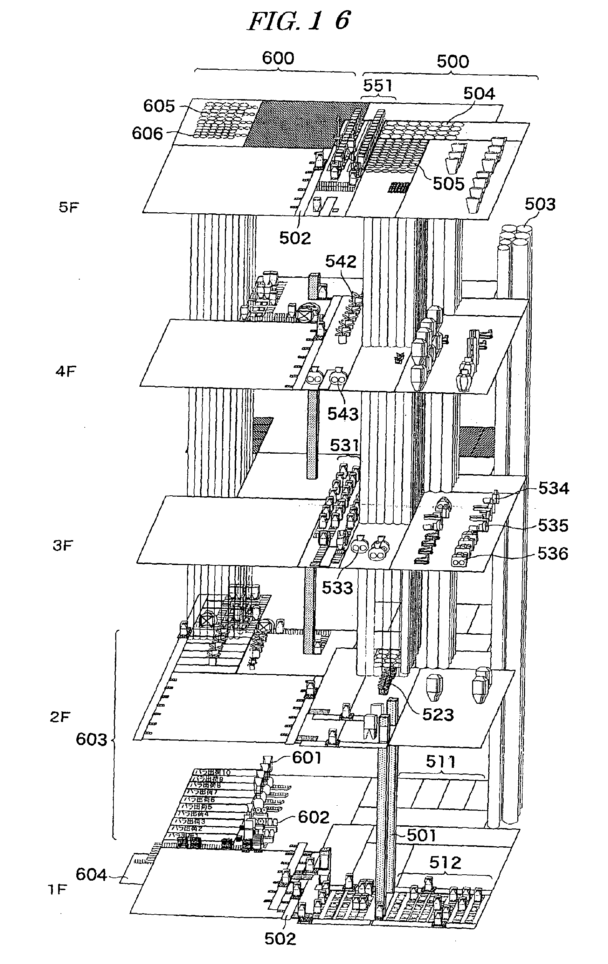

Fig.16 is a drawing schematically showing the mixed animal feed producing plant (Level 3) according to the present invention.

The mixed feed producing plant, having also five floors, has a processing area 500 and an automated warehouse 600 which are adjacent each other. In this embodiment, different characteristics from the mixed feed producing plant of Fig.15 are described; the same point as the mixed feed producing plant of Fig.15 are shown by the same mark and not described.

In case of Level 2, the mash product is contained in the small containers; in case of Level 3, a large-lot mash product is stored in the tank and a small-lot mash product is contained in the small containers. In response, in case of Level 3, a palletizing tank 605 storing the large-lot mash product and a shipping tank 606 are provided. The tanks take a space from second floor to the fifth floor of the processing area 500.

The tanks 605 and 606 are communicated with the mixer 533 by a bulk material supply line, respectively. The tank 605 is communicated with the pellet mill 535 by a bulk material supply line.

Referring to as Figs.8, 9, 11, 12 and 13, in addition to Fig.16, the flow of the each material in a case of Level 3 will be described.

The material receiving and intermediate processing process (S11) is the same as Level 2.

In the material mixing process (S12, as shown in Fig.11), the mash intermediate product and secondary raw material are discharged from the intermediate tank 505 and the secondary raw material tank 504, respectively (S220, 5220'), after weighing by the measuring apparatus 523 on the second floor (S221, S221'), combined (S222) and then transferred to the mixer 533 on the third floor to be mixed (S223) thereby to produce a mash mixed product. In a case of a large-lot product, the mash mixed product is transferred to the shipping tank 606 and pelletizing tank 605 through the bulk material supply line to be stored (S230, S232). The mash mixed product stored in the shipping tank 606 is shipped from the shipping port 603 as needed (S231). In a case of a small-lot product, the mash mixed product is weighed (S225), contained in the small containers (S234), and then transferred to the automated warehouse 600 to be stored (S235). The mash mixed product is shipped from the shipping port 603 in a bulk state or a TB or paper bag packed state by the packing machine 601 or 602 as needed (S236).

In the pelletizing process (S4, as shown in Fig.12), the mash mixed product is discharged from the palletizing tank 605 (S400'), charged into the pellet mill 535 on the third floor through the bulk material supply line (S401) to be pelletized (S402) to produce a pellet mixed product. The produced pellet mixed product is contained in the small containers (S406) and stored in the automated warehouse 600 (S407). Part of the pellet mixed product is shipped from the shipping port 603 in a bulk state or a TB or paper bag packed state by the packing machine 601 or 602 (S408).

The bulk mixing process (S6) is the same as Level 1 and Level 2.

In the aforesaid embodiment, part of the raw material, intermediate product and product is stored in the tank in exchange for the small containers. It is preferable to store the material in the tank in view of cost if the material can be stored in the tank without trouble.

## Claims

1. A plant for producing animal feed by receiving, mixing and processing various materials comprising:
a transfer line for transferring small containers containing a raw material, intermediate product and product respectively;
a building housing said transfer line;
an automated warehouse storing said small containers transferred through said transfer line, adjacent to said building; and
a group of unit structures for carrying out various processing such as mixing, processing and packing, disposed at side of said transfer line,
wherein said building has plural floors (decks) for connecting said unit structures.

2. A plant for producing animal feed by receiving, mixing and processing various materials according to claim 1,
wherein said transfer line is arranged in the length direction of said building and connected to a transfer line in said automated warehouse, and
said group of unit structures is disposed at both side of said transfer line.

3. A plant for producing animal feed by receiving, mixing and processing various materials according to claim 1 or 2,
wherein said transfer line is arranged in plural floors of said building.

4. A plant for producing animal feed by receiving, mixing and processing various materials according to claim 3,
wherein said transfer line is arranged in the uppermost floor and the lowermost floor of said building and
said group of unit structures is connected to the intermediate floors of said building.

5. A plant for producing animal feed by receiving, mixing and processing various materials according to any one of claims 1 to 4 further comprising:
a large-size tank storing the primary raw material and
a supply line for supplying the primary raw material from said tank to said group of unit structures.

6. A plant for producing animal feed by receiving, mixing and processing various materials according to any one of claims 1 to 5 further comprising:
a liquid tank for storing a liquid material and
a supply line for supplying the liquid material from said tank to said group of unit structures.

7. A plant for producing animal feed by receiving, mixing and processing various materials according to any one of claims 1 to 6,
wherein said unit structure has the same outside size as a marine container.

8. A plant for producing animal feed by receiving, mixing and processing various materials comprising:
a tank for storing and discharging a primary raw material;
a supply line for supplying the primary raw material in a bulk form;
a group of small containers for containing each of a secondary raw material, intermediate product and product;
a transfer line for transferring said containers;
a group of equipments for processing, mixing and packing the primary raw material supplied from said tank through said transfer line and/or the secondary raw material and intermediate product get out of said small containers; and
an automated warehouse for storing said small containers.

9. A plant for producing animal feed by receiving, mixing and processing various primary and secondary raw materials comprising:
a plural of tanks for storing and discharging various raw materials respectively;
a plural of supply lines for supplying each of the raw materials in a bulk form;
a tank for storing and discharging a mash intermediate product;
a supply line for supplying the mash intermediate product in a bulk form;
a group of small containers for containing a bulk intermediate product and the product respectively;
a transfer line for transferring said small containers;
a group of equipments for processing, mixing and packing the primary raw material and secondary raw material supplied from each of said tank through said transfer lines, the mash intermediate product supplied through said transfer line and/or the bulk intermediate product get out of said small containers; and
an automated warehouse for storing said small containers.

10. A plant for producing animal feed by receiving, mixing and processing various primary and secondary raw materials comprising:
a plural of tanks for storing and discharging various raw materials respectively;
a plural of supply lines for supplying each of the raw materials in a bulk form;
a tank for storing and discharging a mash intermediate product;
a supply line for supplying the mash intermediate product in a bulk form;
a group of small containers for containing a bulk intermediate product and a small-lot mash product;
a transfer line for transferring said small containers;
a tank for storing and discharging a large-lot mash product;
a supply line for supplying the large-lot mash product in a bulk form;
a group of equipments for processing, mixing and packing the primary raw material and secondary raw material supplied from each of said tank through said supply lines, the mash intermediate product supplied through said supply lines and/or the bulk intermediate product get out of said small containers; and
an automated warehouse for storing said small containers.

11. A plant for producing animal feed by receiving, mixing and processing various primary and secondary raw materials according to any one of claims 8 to 10,
wherein said small container has a capacity of 1 to 2 ton.

12. A plant for producing animal feed by receiving, mixing and processing various primary and secondary raw materials according to any one of claims 8 to 11,
wherein said mixing equipment includes a mixing container in which the secondary raw material, intermediate product or product after being weighed is contained.

13. A method for producing animal feed by receiving, mixing and processing various materials comprising steps of:
receiving the various materials in small containers;
transferring said containers in an automated warehouse to be stored;
transferring said small containers containing the materials corresponding to the product out of said automated warehouse and transferring to a mixing equipment;
mixing the materials at said mixing equipment;
containing the mixed product in small containers; and
transferring said containers in said automated warehouse to be stored.

14. A method for producing animal feed by receiving, mixing and processing various materials comprising steps of:
receiving the various materials in small containers respectively;
transferring said containers in an automated warehouse to be stored;
transferring said small containers containing the materials corresponding to the product from said automated warehouse to a mixing equipment;
mixing the materials at said mixing equipment;
containing the mixed product in small containers;
transferring said containers containing the mixed product to said automated warehouse to be stored;
transferring said small containers containing the mixed product from said automated warehouse to a processing equipment;
processing the mixed product in the processing equipment;
containing the processed mixed product in small containers; and
transferring said small containers containing the processed mixed product to the automated warehouse to be stored.

15. A method for producing animal feed by receiving, mixing and processing various materials comprising steps of:
receiving the primary raw material in a tank;
discharging the primary raw material from said tank and processing into an intermediate product;
containing the processed intermediate product in small containers;
transferring said small containers containing the processed intermediate product to an automated warehouse to be stored;
receiving the secondary raw material in a small container;
transferring the small containers to the automated warehouse to be stored;
transferring said small containers containing the processed intermediate product and small containers containing the secondary raw material from the automated warehouse to a mixing equipment;
mixing the processed intermediate product and the secondary raw material at said mixing equipment to produce a mixed product;
containing the mixed product in small containers; and
transferring said containers containing the mixed product to said automated warehouse to be stored.

16. A method for producing animal feed by receiving, mixing and processing various materials according to claim 15 further comprising steps of:
transferring the small containers containing the mixed product from the automated warehouse to a pelletizing equipment;
pelletizing the mixed product to produce a pellet product;
containing the pellet product in small containers and
transferring said small containers containing the pellet product to said automated warehouse to be stored.

17. A method for producing animal feed by receiving, mixing and processing various materials according to claim 16 further comprising steps of:
transferring the small containers containing the pellet product and small containers containing a flake product from said automated warehouse a bulk mixing equipment;
mixing the pellet product and the flake product at said bulk mixing equipment to produce a bulk product;
containing the bulk product in small containers; and
transferring the small containers containing the bulk product to said automated warehouse to be stored.

18. A method for producing animal feed by receiving, mixing and processing various materials comprising steps of:
receiving the primary raw material in a tank;
discharging the primary raw material and processing into an intermediate product;
receiving a mash intermediate product in a tank;
receiving a bulk intermediate product in small containers;
transferring said small containers containing the bulk intermediate product to an automated warehouse to be stored;
receiving the secondary raw material in a tank;
discharging the mash intermediate product and the secondary raw material from each tank and transferring to a mixing equipment;
mixing the mash intermediate product and the secondary raw material at said mixing equipment to produce a mixed product;
containing the mixed product in small containers; and
transferring said containers containing the mixed product to said automated warehouse to be stored.

19. A method for producing animal feed by receiving, mixing and processing various materials according to claim 18 further comprising steps of:
transferring the small containers containing the mixed product to a pelletizing equipment;
pelletizing the mixed product to produce a pellet product;
containing the pellet product in small containers; and
transferring said containers containing the pellet product to said automated warehouse to be stored.

20. A method for producing animal feed by receiving, mixing and processing various materials according to claim 19 further comprising steps of:
transferring the small containers containing the pellet product and the small containers containing the flake product from said warehouse to a bulk mixing equipment;
mixing the pellet product and the flake product in said bulk mixing equipment to produce a bulk product;
containing the bulk product in small containers; and
transferring said containers containing the bulk product to said automated warehouse to be stored.

21. A method for producing animal feed by receiving, mixing and processing various materials comprising steps of:
receiving the primary raw material in a tank;
discharging the primary raw material and processing into an intermediate product;
receiving a mash intermediate product in a tank;
receiving a bulk intermediate product in small containers;
transferring the small containers containing the bulk intermediate product to an automated warehouse to be stored;
receiving the secondary raw material in a tank;
discharging the mash intermediate product and the secondary raw material from each tank and transferring to a mixing equipment;
mixing the mash intermediate product and the secondary raw material at said mixing equipment to produce a mixed product;
containing a bulk mixed product and a small-lot mash mixed product in small containers respectively;
transferring said containers to said automated warehouse to be stored; and
receiving a large-lot mash mixed product in each of a product tank and a palletizing tank.

22. A method for producing animal feed by receiving, mixing and processing various materials according to claim 21 further comprising steps of:
discharging the mixed product from said pelletizing tank and transferring to a pelletizing equipment;
pelletizing the mixed product to produce a pellet mixed product;
containing the pellet mixed product in small containers; and
transferring said small containers containing the pellet mixed product to said automated warehouse to be stored.

23. A method for producing animal feed by receiving, mixing and processing various materials according to claim 22 further comprising steps of:
transferring the small containers containing the pellet mixed product and the small containers containing the flake product from said automated warehouse to a bulk mixing equipment;
mixing the pellet mixed product and the flake product at said bulk mixing equipment to produce a bulk mixed product;
containing the bulk mixed product in small containers, and
transferring said small containers containing the bulk mixed product to said automated warehouse to be stored.
